# EUROPEAN PATENT SPECIFICATION

(11) **EP 3 225 140 B1**
(45) Date of publication and mention of the grant of the patent: **18.03.2020**
(21) Application number: 17161327.6
(22) Date of filing: 16.03.2017
(51) Int. Cl.: A47J 27/17, B01F 15/06, A23L 3/36

(54) **METHOD FOR ENHANCING THE COOLING OF AN INDUSTRIAL KITCHEN KETTLE AND AN INDUSTRIAL KITCHEN KETTLE TO BE COOLED**
VERFAHREN ZUR VERBESSERUNG DER KÜHLUNG EINES INDUSTRIELLEN KÜCHENKESSELS UND ZU KÜHLENDER INDUSTRIELLER KÜCHENKESSEL
PROCÉDÉ PERMETTANT D'AMÉLIORER LE REFROIDISSEMENT D'UNE BOUILLOIRE DE CUISINE INDUSTRIELLE ET BOUILLOIRE DE CUISINE INDUSTRIELLE À REFROIDIR

(30) Priority: 01.04.2016 FI 20165278
(43) Date of publication of application: 04.10.2017
(73) Proprietor: Metos OY AB, 04220 Kerava (FI)
(72) Inventor: Puupponen, Antti, 00510 Helsinki (FI)
(74) Representative: Sole, Timo

(56) References cited:
- EP-A2- 1 275 306
- WO-A1-01/49134
- US-A- 4 246 955

## Description

The invention relates to a method for enhancing the cooling of an industrial kitchen kettle, the method using a kettle with an inner jacket and an outer jacket, between which is formed an intermediate space, into which cooling medium is arranged to be fed by feed elements and discharged by discharge elements, in which method cooling medium is fed into the intermediate space substantially in the same amount as is discharged from it.

The invention further relates to an industrial kitchen kettle to be cooled, the kettle with an inner jacket and an outer jacket, between which is formed an intermediate space, into which cooling medium is arranged to be fed by feed elements and discharged by discharge elements.

In industrial kitchens, such as hospital and central kitchens, as well as restaurants, bakeries and the food industry, large amounts of food are prepared at one time, generally in industrial kitchen kettles, the volumes of which are typically in the range of approximately 40-500 I. It is often necessary to distribute food every day of the week, which can be implemented, for example, using the "cook and chill" method. In this case, food is prepared only on working days, while, at the same time, the servings required for the weekend are also pre-prepared. After preparing the pre-prepared food batches, these are cooled to a temperature of less than 8°C and stored at a suitable temperature. Thereafter, the food batch can later be heated at once or in servings for consumption. The disadvantage of the cook and chill method is that, because the food is stored until it is heated, this can cause hygiene problems. In this case, the critical factor is not the storing at a temperature less than 8°C because, at these temperatures, micro-organisms, such as bacteria and fungi, cannot easily multiply. As the critical factor must be considered the cooling stage, during which the temperature of the foods is lowered from 55°C to a final temperature of less than 8°C. In this temperature range, the pre-prepared food has optimal reproductive conditions for micro-organisms, and, thus, these can multiply with particular intensity during the cooling stage.

In order to keep the multiplying of micro-organisms during the cooling stage within tolerable limits, it is essential that pre-prepared foods are cooled to the final temperature in as short a time as possible. The aim should be to implement the cooling stage in less than 120 minutes, specifically less than 90 minutes.

Normally, the cooling of a kettle is arranged such that cold fluid is fed into the steam jacket either from the water mains or from a separate ice bank. The fluid inlet is in the bottom of the jacket and the outlet is in the upper part of the jacket. Achieving an efficient flow velocity is difficult in such a known solution, due to which the heat transfer coefficient in the jacket remains relatively low.

Publication KR20110041837A presents an industrial kitchen kettle to be cooled, having an inner jacket and an outer jacket, between which is formed an intermediate space, into which cooling medium is arranged to be fed by feed elements and discharged by discharge elements. Into the intermediate space are arranged control vanes, which function as cooling ribs. Publication FI123987 presents a solution, in which heating or cooling medium is led into the housing of a mixing shaft. Publication GB331606 presents a mixing vessel to be cooled, which is surrounded by a jacket, which is adapted for heat transfer fluid and into which heat transfer fluid is fed in a circulating motion.

EP1275306A2 shows use of a compression coolant within an intermediate space. A pump is used to supply the cooling medium into the intermediate space where the cooling medium changes at least partly from the liquid to the gaseous phase. WO0149134A1 discloses a dual cooling method with combined water cooling in the intermediate space and a vacuum cooling in the cooking chamber. The pump removes water from the intermediate space and recirculates the same water to and from the intermediate space. US4246955A1 discloses a pressure cooker with a separate cooking vessel positioned on the bottom of the pressure vessel. A space for the heat transfer medium is formed at the bottom of the pressure vessel.

The object of the present invention is to provide a solution, with which the flow velocity in the jacket can be enhanced in a relatively simple manner. In order to achieve this object, the method for cooling an industrial kitchen kettle is characterized in that, in the method, the flow velocity of the cooling medium is increased using a pump arranged in connection with the intermediate space, by which pump the cooling medium is taken from the intermediate space into an auxiliary circulation outside the intermediate space and is returned into the intermediate space.

The amount entering the auxiliary circulation is, when coolant is used, preferably in the range of approx. 5 l/min - approx. 200 l/min.

Preferably, the cooling medium is taken into the auxiliary circulation from the upper part of the intermediate space and fed back into the intermediate space in the area of the lower part of the intermediate space. The cooling medium from the auxiliary circulation is fed into the intermediate space preferably substantially tangentially.

A cooled industrial kitchen kettle according to the invention is, in turn, characterized in that in connection with the intermediate space is arranged a pump, by which the flow velocity of the cooling medium can be significantly increased without increasing the amount of fresh cooling medium to be fed into the intermediate space. The input of the pump is preferably connected to the area of the upper part of the intermediate space and the output of the pump is connected to the area of the lower part of the intermediate space.

By a solution according to the invention, the heat transfer of a kettle can be signifi-cantly enhanced by significantly increasing the flow velocity of the cooling medium in the intermediate space without increasing the consumption of cooling medium. The efficiency of heat transfer is affected in particular by the flow velocity of the medium adjacent to the wall of the inner jacket.

In the following, the invention is described in more detail by means of reference to the accompanying figures, in which:
- Fig. 1: shows a diagrammatic vertical sectional view of a solution according to prior art for cooling an industrial kitchen kettle, and
- Fig. 2: shows a diagrammatic lateral view of a solution according to the invention for cooling an industrial kitchen kettle, and
- Fig. 3: shows a horizontal section of the industrial kitchen kettle at the height of the return connection of the auxiliary circulation.

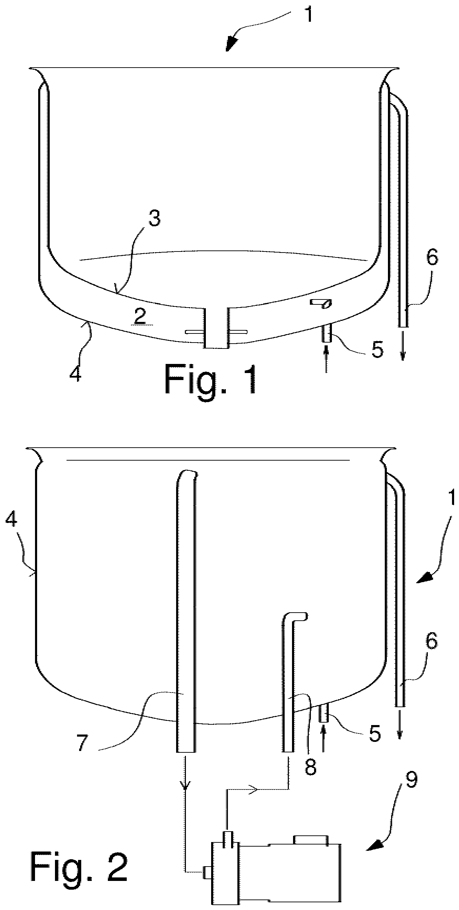

Fig. 1 shows the cooling of a double-jacketed kettle 1, implemented in an ordinary manner using water as the coolant. The inner jacket 3 defines the inside food preparation space of the kettle, where are typically located the mixing elements (not shown), which are typically rotated by means of the motor elements (not shown) under the kettle. The outer jacket 4 is disposed at a distance from the inner jacket 3, wherein between these is formed an intermediate space 2, into which can be fed, during food preparation, steam or other heating medium to enhance food cooking efficiency. Within the intermediate space are typically also located heating resistors (not shown) for heating the kettle. Once cooking has ended, the food is cooled as quickly as possible by turning off the heating resistors and, thereafter, leading cold cooling water into the intermediate space 2, for example, at a speed of 25 l/min, the temperature of the cooling water being, for example, 0.5°C.

Cold cooling water is fed into the intermediate space 2 between the inner jacket 3 and the outer jacket 4 either from the water mains or from a separate ice bank. Cooling water is fed in from the lower part of the cooling jacket through a feed fitting 5, and the warmed cooling water is discharged through a discharge pipe 6 on the upper edge of the jacket. Cold cooling water is continuously fed into the intermediate space in the same amount as is discharged from it. The flow of the cooling water in cooling arranged in this manner is rather low for achieving an efficient flow velocity in the intermediate space, due to which heat transfer efficiency in the jacket remains low. By increasing the feed rate of the cooling water, the flow velocity and, thus, the efficiency of heat transfer can be improved but, at the same time, cooling water consumption is increased.

Fig. 2 shows one embodiment example of a solution according to the invention. Therein, alongside the normal cooling circulation 5, 6, to the outside of the kettle is added a pump 9, which draws the warmed cooling water from the upper part of the intermediate space through the pipe 7 and circulates it lower into the intermediate space through the pipe 8. Into the auxiliary circulation is taken cooling water preferably more than fresh cooling water is fed into the intermediate space. For example, if the feeding amount of the cooling water is 50 l/min, into the auxiliary circulation is taken an amount, which is preferably in the range of 75 l/min - 150 l/min. The water is fed back into the intermediate space at high speed, tangentially from one or more fittings, which makes the fluid rotate over a wide area within the intermediate space.

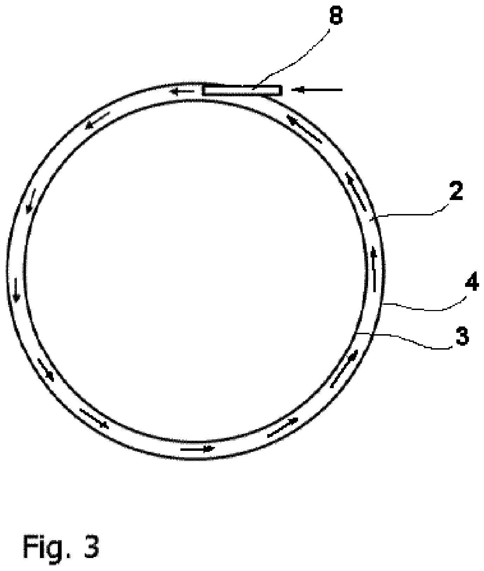

Fig. 3 shows a diagrammatical section of the industrial kitchen kettle at the return connection 8 of the auxiliary circulation. The return connection is arranged to direct the cooling water from the return circulation substantially tangentially into the intermediate space 2 to create a rotating motion of the water in the intermediate space in the direction indicated by the arrows. This significantly improves heat transfer and reduces the time used for cooling without increasing the consumption of cooling water. Alternatively, the amount of water used in cooling can be reduced. When using mains water as the cooling water, it is possible to further optimize the flow of the cooling water with a valve and save more water. An additional advantage of a solution according to the invention is that the water returning to the intermediate space from the external circulation is warmed to some degree, wherein it does not attempt to sink to the bottom of the intermediate space and, thus, slow down the water circulation in the lower part of the intermediate space. Cooling can be enhanced by arranging into the intermediate space control vanes (not shown), which make the cooling water rise helically in the intermediate space. At the same time, the control vanes function as cooling ribs contributing to cooling efficiency. Further, cooling can be enhanced by utilizing a mixer (not shown) in the kettle, which can be formed as a cooling mixer, for example, as is described in the earlier patent EP1357806 of the applicant of the present application. In this case, the cooling of the food throughout in the kettle will be further enhanced.

The affect on cooling efficiency of a solution according to the invention was examined by calculation (in a CFD simulation (Computational fluid dynamics)) based on a kettle with an inner volume of 300 I. The volume of the intermediate space in the kettle was 100 I. The cooling medium was water. The material of the jacket was acid-proof steel.

In the simulation, it was observed that a solution according to the invention substantially improved heat transfer efficiency. For example, when the feeding speed of the cooling water was 50l/min and the temperature of the kettle 60°C, there was obtained by a solution according to the invention, in which cooling water was led into an auxiliary circulation in an amount of 100 l/min, a calculated improvement in total heat transfer equal to approx. 30 % in relation to the ordinary way. When the temperature of the kettle was 5°C, the improvement using the same feeding speed of cooling water into the intermediate space and the same amount into the auxiliary circulation was approx. 45 %.

The invention is described above using a pump as the means to increase the circulation speed of the cooling water, which pump creates the auxiliary circulation outside the intermediate space but the invention can be considered as to be imple-mented using some other means of increasing the flow velocity of the cooling medium, such as, for example, a propeller or impeller or piston arranged inside the intermediate space. As alternatives can also be considered a blade rotating around the intermediate space or using compressed air to increase the speed of the medium.

The heat transfer of the kettle can be further enhanced to some extent by making the support structures in the intermediate space to obstruct the flow as little as possible and by bringing the fresh cooling water feed fitting closer to the middle part of the jacket and closer to the lower edge of the kettle.

Hot water is preferably discharged from the intermediate space before cooling begins, which contributes to improving cooling speed. Once cooling has ended, the cooling water can be discharged from the intermediate space by a pump.

The invention is described above in connection with the cooling of a kettle but it can also be utilized to enhance heating when using a liquid heat transfer medium.

The heat transfer medium can also be, instead of water used in the above examples, for example, glycol, oil, a special heat transfer fluid, gas or a combination of various heat transfer agents.

### List of reference numerals:

- 1: Kettle
- 2: Intermediate space
- 3: Inner jacket
- 4: Outer jacket
- 5: Feed into the intermediate space
- 6: Discharge from the intermediate space
- 7: Input to the pump from the intermediate space
- 8: Output from the pump into the intermediate space
- 9: Pump

## Claims

1. A method for enhancing the cooling of an industrial kitchen kettle, the method using a kettle (1) with an inner jacket (3) and an outer jacket (4), between which is formed an intermediate space (2), into which cooling medium is arranged to be fed by feed elements (5) and discharged by discharge elements (6) said feed and discharge elements forming a normal cooling circulation, in which method cooling medium is fed into the intermediate space substantially in the same amount as is discharged from it, **characterized in that**, in the method, the flow velocity of the cooling medium in the intermediate space is increased using an additional pump (9) arranged in connection with the intermediate space alongside the normal cooling circulation (5, 6), by which pump (9) cooling medium is taken from the intermediate space into an auxiliary circulation (7, 8) outside the intermediate space (2) and returned into the intermediate space (2).

2. A method according to claim 1, **characterized in that**, in the method, cooling medium is taken into the auxiliary circulation from the upper part of the intermediate space (2) and fed back into the intermediate space (2) in the area of the lower part of the intermediate space.

3. A method according to claim 2, **characterized in that**, in the method, cooling medium from the auxiliary circulation is fed into the intermediate space (2) substantially tangentially.

4. A method according to any one of claims 1-3, **characterized in that**, in the method, cooling medium is taken into the auxiliary circulation approx. 5 l/min - approx. 200 l/min.

5. A method according to any one of the preceding claims, **characterized in that**, in the method, into the intermediate space are arranged control vanes, which make the cooling medium move helically from the lower part of the intermediate space into the upper part of the intermediate space and, at the same time, function as cooling ribs.

6. A method according to any one of the preceding claims, **characterized in that**, in the method, as the cooling medium is used water, glycol, oil, a special heat transfer fluid, gas or combinations of thereof.

7. An industrial kitchen kettle (1) to be cooled, having an inner jacket (3) and an outer jacket (4), between which is formed an intermediate space (2), into which cooling medium is arranged to be fed by feed elements (5) and discharged by discharge elements (6) said feed and discharge elements forming a normal cooling circulation, **characterized in that** in connection with the intermediate space is arranged an additional pump (9) arranged to take cooling medium from the intermediate space into an auxiliary circulation (7, 8) outside the intermediate space (2) and to returned said cooling medium into the intermediate space (2) to increase the flow velocity of the cooling medium in the intermediate space (2).

8. An industrial kitchen kettle (1) to be cooled according to claim 7, **characterized in that** the input (7) of the pump is connected to the area of the upper part of the intermediate space and the output (8) of the pump (9) is connected to the area of the lower part of the intermediate space.

9. An industrial kitchen kettle (1) to be cooled according to claim 7 or 8, **characterized in that** into the intermediate space are further arranged control elements, which make the cooling medium rise helically in the intermediate space from the lower part of the intermediate space into the upper part of the intermediate space and, at the same time, function as cooling ribs.

## Patentansprüche

1. Verfahren zum Verbessern des Kühlens eines Großküchenkessels, wobei das Verfahren einen Kessel (1) mit einem Innenmantel (3) und einem Außenmantel (4) verwendet, zwischen denen ein Zwischenraum (2) gebildet ist, in dem ein Kühlmedium angeordnet ist, das durch Einlasselemente (5) einzulassen und durch Auslasselemente (6) auszulassen ist, wobei die Einlass- und Auslasselemente einen normalen Kühlkreislauf bilden, wobei bei dem Verfahren ein Kühlmedium in den Zwischenraum im Wesentlichen in der gleichen Menge eingelassen wird, wie es daraus ausgelassen wird, **dadurch gekennzeichnet, dass** bei dem Verfahren die Fließgeschwindigkeit des Kühlmediums in dem Zwischenraum unter Verwendung einer zusätzlichen Pumpe (9), welche in Verbindung mit dem Zwischenraum neben dem normalen Kühlkreislauf (5, 6) angeordnet ist, erhöht wird, wobei durch die Pumpe (9) ein Kühlmedium aus dem Zwischenraum in einen Hilfskreislauf (7, 8) außerhalb des Zwischenraums (2) genommen und in den Zwischenraum (2) zurückgeführt wird.

2. Verfahren nach Anspruch 1, **dadurch gekennzeichnet, dass** bei dem Verfahren ein Kühlmedium in den Hilfskreislauf aus dem oberen Teil des Zwischenraums (2) genommen und in den Zwischenraum (2) in dem Bereich des unteren Teils des Zwischenraums zurückgeführt wird.

3. Verfahren nach Anspruch 2, **dadurch gekennzeichnet, dass** bei dem Verfahren ein Kühlmedium aus dem Hilfskreislauf in den Zwischenraum (2) im Wesentlichen tangential eingelassen wird.

4. Verfahren nach einem der Ansprüche 1-3, **dadurch gekennzeichnet, dass** bei dem Verfahren ein Kühlmedium in den Hilfskreislauf mit etwa 5 l/min - etwa 200 l/min genommen wird.

5. Verfahren nach einem der vorhergehenden Ansprüche, **dadurch gekennzeichnet, dass** bei dem Verfahren in dem Zwischenraum Steuerrippen angeordnet sind, die das Kühlmedium dazu bringen, sich spiralförmig von dem unteren Teil des Zwischenraums in den oberen Teil des Zwischenraums zu bewegen und gleichzeitig als Kühlrippen zu funktionieren.

6. Verfahren nach einem der vorhergehenden Ansprüche, **dadurch gekennzeichnet, dass** bei dem Verfahren als Kühlmedium Wasser, Glykol, Öl, ein spezielles Wärmeübertragungsfluid, Gas oder Kombinationen daraus verwendet wird.

7. Zu kühlender Großküchenkessel (1), der einen Innenmantel (3) und einen Außenmantel (4) aufweist, zwischen denen ein Zwischenraum (2) gebildet ist, in dem ein Kühlmedium angeordnet ist, das durch Einlasselemente (5) einzulassen und durch Auslasselemente (6) auszulassen ist, wobei die Einlass- und Auslasselemente einen normalen Kühlkreislauf bilden, **dadurch gekennzeichnet, dass** in Verbindung mit dem Zwischenraum eine zusätzliche Pumpe (9) angeordnet ist, die angeordnet ist, um ein Kühlmedium aus dem Zwischenraum in einen Hilfskreislauf (7, 8) außerhalb des Zwischenraums (2) zu nehmen und um das Kühlmedium in den Zwischenraum (2) zurückzuführen, um die Fließgeschwindigkeit des Kühlmediums in dem Zwischenraum (2) zu erhöhen.

8. Zu kühlender Großküchenkessel (1) nach Anspruch 7, **dadurch gekennzeichnet, dass** die Eingabe (7) der Pumpe mit dem Bereich des oberen Teils des Zwischenraums verbunden ist und die Ausgabe (8) der Pumpe (9) mit dem Bereich des unteren Teils des Zwischenraums verbunden ist.

9. Zu kühlender Großküchenkessel (1) nach Anspruch 7 oder 8, **dadurch gekennzeichnet, dass** in dem Zwischenraum ferner Steuerelemente angeordnet sind, die das Kühlmedium dazu bringen, spiralförmig in dem Zwischenraum von dem unteren Teil des Zwischenraums in den oberen Teil des Zwischenraums anzusteigen und gleichzeitig als Kühlrippen zu funktionieren.

## Revendications

1. Procédé destiné à améliorer le refroidissement d'une bouilloire de cuisine industrielle, le procédé employant une bouilloire (1) avec une gaine intérieure (3) et une gaine extérieure (4), entre lesquelles est formé un espace intermédiaire (2) dans lequel est disposé un fluide de refroidissement destiné à être alimenté par des éléments d'alimentation (5) et évacué par des éléments d'évacuation (6), lesdits éléments d'alimentation et d'évacuation formant un circuit de refroidissement normal, ledit procédé comprenant l'alimentation de fluide de refroidissement dans l'espace intermédiaire en une quantité substantiellement égale à celle évacuée à partir de celui-ci, **caractérisé en ce que**, dans le procédé, la vitesse d'écoulement du fluide de refroidissement dans l'espace intermédiaire est augmentée à l'aide d'une pompe supplémentaire (9) disposée en connexion avec l'espace intermédiaire le long du circuit de refroidissement normal (5, 6), la pompe (9) permettant de amener du fluide de refroidissement à partir de l'espace intermédiaire vers un circuit auxiliaire (7, 8) à l'extérieur de l'espace intermédiaire (2) et de le renvoyer vers l'espace intermédiaire (2).

2. Procédé selon la revendication 1, **caractérisé en ce que**, dans le procédé, du fluide de refroidissement est amené dans le circuit auxiliaire à partir de la partie supérieure de l'espace intermédiaire (2) et alimenté dans l'espace intermédiaire (2) dans la zone de la partie inférieure de l'espace intermédiaire.

3. Procédé selon la revendication 2, **caractérisé en ce que**, dans le procédé, du fluide de refroidissement provenant du circuit auxiliaire est alimenté dans l'espace intermédiaire (2) substantiellement tangentiellement.

4. Procédé selon l'une quelconque des revendications 1 à 3, **caractérisé en ce que**, dans le procédé, du fluide de refroidissement est amené dans le circuit auxiliaire à raison d'environ 5 l/min à environ 200 l/min.

5. Procédé selon l'une quelconque des revendications précédentes, **caractérisé en ce que**, dans le procédé, des ailettes de régulation sont disposées dans l'espace intermédiaire, lesquelles déplacent le fluide de refroidissement de façon hélicoïdale à partir de la partie inférieure de l'espace intermédiaire vers la partie supérieure de l'espace intermédiaire, et lesquelles fonctionnent comme des nervures de refroidissement.

6. Procédé selon l'une quelconque des revendications précédentes, **caractérisé en ce que**, dans le procédé, de l'eau, du glycol, une huile, un fluide caloporteur spécial, un gaz ou une combinaison de ceux-ci est utilisé(e) comme fluide de refroidissement.

7. Bouilloire de cuisine industrielle (1) à refroidir, comportant une gaine intérieure (3) et une gaine extérieure (4), entre lesquelles est formé un espace intermédiaire (2) dans lequel est disposé un fluide de refroidissement destiné à être alimenté par des éléments d'alimentation (5) et évacué par des éléments d'évacuation (6), lesdites éléments d'alimentation et d'évacuation formant un circuit de refroidissement normal, **caractérisée en ce qu'**une pompe supplémentaire (9) est disposé en connexion avec l'espace intermédiaire et conçue pour amener du fluide de refroidissement à partir de l'espace intermédiaire vers un circuit auxiliaire (7, 8) à l'extérieur de l'espace intermédiaire (2) et pour renvoyer ledit fluide de refroidissement dans l'espace intermédiaire (2) pour augmenter la vitesse d'écoulement du fluide de refroidissement dans l'espace intermédiaire (2).

8. Bouilloire de cuisine industrielle (1) à refroidir selon la revendication 7, **caractérisée en ce que** l'entrée (7) de la pompe est reliée à la zone de la partie supérieure de l'espace intermédiaire et la sortie (8) de la pompe (9) est reliée à la zone de la partie inférieure de l'espace intermédiaire.

9. Bouilloire de cuisine industrielle (1) à refroidir selon la revendication 7 ou 8, **caractérisée en ce que** des éléments de régulation sont en outre disposés dans l'espace intermédiaire, lesquels font monter le fluide de refroidissement de façon hélicoïdale dans l'espace intermédiaire à partir de la partie inférieure de l'espace intermédiaire vers la partie supérieure de l'espace intermédiaire, tout en fonctionnant comme des nervures de refroidissement.
